Europäisches Patentamt

European Patent Office

Office européen des brevets

(19)

(11) Veröffentlichungsnummer: **0 195 209**
**B1**

(12) **EUROPÄISCHE PATENTSCHRIFT**

(45) Veröffentlichungstag der Patentschrift:
**22.03.89**

(21) Anmeldenummer: **86101254.0**

(22) Anmeldetag: **31.01.86**

(51) Int. Cl.⁴: **B 60 R 25/02**

(54) **Lenkschloss.**

(30) Priorität: **19.03.85 DE 3509834**

(43) Veröffentlichungstag der Anmeldung:
**24.09.86 Patentblatt 86/39**

(45) Bekanntmachung des Hinweises auf die Patenterteilung:
**22.03.89 Patentblatt 89/12**

(84) Benannte Vertragsstaaten:
**DE FR GB IT**

(56) Entgegenhaltungen:
**DE-A- 2 035 282**
**DE-A- 2 059 215**
**GB-A- 2 063 985**

(73) Patentinhaber: **NEIMAN, 39 Avenue Marceau,**
**F-92400 Courbevoie (FR)**

(72) Erfinder: **Weber, Günter, Bergerheide 54,**
**D-5600 Wuppertal 1 (DE)**

(74) Vertreter: **Patentanwaltsbüro Cohausz & Florack,**
**Postfach 14 01 47, D-4000 Düsseldorf 1 (DE)**

ACTORUM AG

## Beschreibung

Die Erfindung betrifft ein Lenkschloß für Kraftfahrzeuge, mit einem Schließzylinder und einem die Lenksäule arretierenden Sperriegel, der bei Drehen des axial nicht verschieblichen Zylinderkerns durch den Schlüssel der Abzugsstellung in die Fahrtstellung durch eine den Zylinderkern axial verlängernde Steuerwelle über ein Zwischenteil in die entsperrte Stellung verschiebbar und nach Zurückdrehen des Zylinderkerns in die Abzugsstellung in der entsperrten Stellung durch einen am Schlüssel anliegenden Teil, insbesondere einen Schieber, gehalten ist (Sperrbereitschaftsstellung), der erst nach vollständigem Abzug des Schlüssels über ein etwa parallel zum Zylinderkern geführtes Übertragungsteil den Sperriegel freigibt.

Solche Lenkschlösser sind aus der DE-A-2 059 215 und der DE-C-2 947 069 bekannt. Bei diesen bekannten Lenkschlössern ist zum Schaffen der Sperrbereitschaftsstellung ein Sperrteil eingesetzt, das den Sperriegel so lange in der nicht sperrenden Stellung zurückhält, bis ein zweiarmiger Hebel bei vollständigem Schlüsselabzug das Sperrteil freigibt. Für die Funktion des Sperrteils ist es erforderlich, daß dieses verhältnismäßig komplizierte Bewegungen ausführt. Es wird verschoben und zusätzlich verschwenkt oder verdreht und zusätzlich gekippt, so daß eine hohe Fertigungsgenauigkeit erforderlich ist. Ferner können diese Schlösser aufgrund ihrer Kompliziertheit störanfällig sein.

Aufgabe der Erfindung ist es, ein Lenkschloß der eingangs genannten Art derart zu verbessern, daß es bei einfacher Konstruktion und leichter Betätigung keine komplizierten Bewegungen der die Sperrbereitschaftsstellung erzeugenden Teile erfordert.

Diese Aufgabe wird erfindungsgemäß dadurch gelöst, daß beim Drehen der Steuerwelle durch den Zylinderkern von der Abzugsstellung in die Fahrtstellung über diesen Drehbereich die Steuerwelle durch eine Schrägfläche des Übertragungsteils vom Zylinderkern weg gegen Federdruck axial verschiebbar ist, um noch vor der Fahrtstellung hinter einem Rücksprung des Übertragungsteils einzurasten, daß aufgrund eines begrenzten Drehspiels zwischen Zylinderkern und Steuerwelle der Zylinderkern von der Fahrtstellung in die Abzugsstellung zurückdrehbar ist, ohne die Steuerwelle mitzunehmen, und daß bei vollständigem Abzug des Schlüssels das Übertragungsteil außerhalb des Bewegungsbereichs der Steuerwelle ist, so daß zur Freigabe des Sperriegels die Steuerwelle in die Ausgangsstellung durch Federdruck zurückdrehbar ist.

Bei diesem Schloß wird die Sperrbereitschaft durch den begrenzten freien Drehwinkel zwischen Zylinderkern und Steuerwelle erzeugt, ohne komplizierte Bewegungen oder Teile zu erfordern. Das Schloß ist konstruktiv besonders einfach, erfordert wenig Einzelteile und ist nicht störanfällig. Es erfordert keine hohe Fertigungsgenauigkeit, baut bei geringem Gewicht klein und ist einfach zu montieren. Das Schloß ist besonders einfach zu betätigen, da der Zylinderkern durch den Schlüssel nicht axial verschoben zu werden braucht. Auch kann durch das Schloß ein vom Zylinderkern weit entfernter Sperriegel einfach und leicht gesteuert werden.

Diese Vorteile sind besonders ausgeprägt, wenn die Steuerwelle auf der dem Zylinderkern zugewandten Seite einen Vorsprung, insbesondere einen achsparallelen Zapfen aufweist, der am Rücksprung des Übertragungsteils zur Anlage gelangt. Hierbei kann der Vorsprung oder Zapfen ein teilkreisförmiges Langloch in einem seitlich vorstehenden Bereich des Zylinderkerns durchdringen und mit seinem freien Ende am Übertragungsteil anliegen.

Vorzugsweise wird vorgeschlagen, daß am Zylinderkern auf der der Steuerwelle zugewandten Seite ein hülsenförmiger Kragen größeren Innendurchmessers als der Außendurchmesser des Zylinderkern koaxial vorsteht, in dem ein scheibenförmiges erweitertes Ende der Steuerwelle koaxial einliegt. Dies führt zu einer einfachen Montage und einem sicheren Ankuppeln von Steuerwelle und Zylinderkern. Hierbei kann der äußere Rand des scheibenförmigen Endes der Steuerwelle den Vorsprung oder Zapfen tragen.

Vorzugsweise wird vorgeschlagen, daß das Übertragungsteil ein zweiarmiger Hebel ist, dessen eines Ende am Schieber anliegt und dessen anderes Ende die Schrägfläche und den Rücksprung für die Steuerwelle, insbesondere für den Zapfen der Steuerwelle, bildet. Ein einfaches und sicheres Betätigen des Sperriegels als auch ein einfaches Zurückdrehen der Steuerwelle wird dadurch erreicht, daß die Steuerwelle mit einem Steuernocken koaxial verbunden ist, der beim Drehen der Steuerwelle einen mit dem Sperriegel verbundenen Mitnehmer gegen Federdruck betätigt und der nach dem Aufheben der Sperrbereitschaftstellung durch den Mitnehmer aufgrund des Federdrucks verdrehbar ist.

Ein Ausführungsbeispiel der Erfindung ist in den Zeichnungen dargestellt und wird im folgenden näher beschrieben. Es zeigen:

Fig. 1 einen Längsschnitt durch den oberen Teil eines Lenkschlosses;

Fig. 2 einen Schnitt nach II-II in Fig. 1;

Fig. 3 einen Schnitt nach III-III in Fig. 2;

Fig. 4 bis 6 Schnitte nach IV-IV in Fig. 1 in Schlüsselabzugsstellung, Fahrtstellung und Stellung «Halt» vor Schlüsselabzug.

In einer rohrförmigen, auf der Sperriegelseite offenen und auf der Schlüsseleinführungsseite nur mit einer kleinen runden (schlitzförmigen) Öffnung versehenen, rohrförmigen Ummantelung 1 ist nahe der Schlüsseleinführungsseite ein Zylindergehäuse 2 gelagert, das drehbar einen Zylinderkern 3 mit Plättchenzuhaltungen 4 aufnimmt. Auf der Schlüsseleinführungsseite ist ein Schieber 5 quer zum Schlüsselkanal 6 gelagert, der bei abgezogenem Schlüssel den Schlüsselkanal verschließt und bei Einstecken eines Schlüssels radial zur Seite verdrängt wird. An der Außenseite des Schiebers 5 liegt ein freies Ende eines zweiarmigen Hebels (Übertragungsteil) 7 an, dessen Drehachse rechtwinklig zur Schloßachse liegt und der etwa parallel zur Schloßachse außerhalb des Zylinderkerns im Zylindergehäuse 2 gelagert ist.

Der Schlüsseleinführungsseite gegenüberliegend ist am Zylinderkern 3 ein koaxialer, hülsenförmiger Kragen 8 angeformt, dessen Innendurchmesser größer ist als der Außendurchmesser des Zylinderkerns. Innerhalb des Kragens 8 liegt das freie Ende einer koaxialen Steuerwelle 9 ein, das eine kreisförmige Scheibe 10 bildet, deren Außendurchmesser nur wenig kleiner ist als der Innendurchmesser des Kragens 8. Die Steuerwelle 9 ist gegenüber dem axial unverschieblichen Zylinderkern 3 axial verschieblich, wobei der Kragen so hoch ausgeführt ist, daß in beiden Verschubstellungen der Steuerwelle 9 die Scheibe 10 innerhalb des Kragens einliegt. Die Scheibe 10 trägt am äußeren Rand auf der dem Zylinderkern zugewandten Seite einen achsparallelen Zapfen 11, der ein teilkreisförmiges Langloch 12 durchdringt, das im Boden zwischen Kragen 8 und Zylinderkern 3 eingebracht ist. Aufgrund dieses Langloches 12 ist der Zylinderkern 3 begrenzt drehbeweglich gegenüber der Steuerwelle 9.

Das dem Schieber 5 abgewandte freie Ende des Hebels 7 ist etwa T-förmig und bildet auf einer Seite des T-Balkens eine Schrägfläche 13 und auf der anderen Seite einen Rücksprung 14. Wird die Steuerwelle 9 durch den Zylinderkern 3 verdreht, so gelangt der Zapfen 11 in Anlage an die Schrägfläche 13, so daß hierdurch die Steuerwelle 9 vom Zylinderkern weg verschoben wird. Hiernach läuft der Zapfen 11 an der auf die Schrägfläche 13 folgenden zur Schloßachse rechtwinkligen Fläche 15 des Hebels 7 entlang, um den Rücksprung 14 zu erreichen, der es dem Zapfen 11 und damit der Steuerwelle 9 erlaubt, wieder die axiale Ausgangsstellung zu erreichen. Ist der Schlüssel nicht eingesteckt, so ist der Schieber 5 so weit nach innen verschoben, daß das der Schlüsseleinführungsseite abgewandte Ende des Hebels 7 außerhalb des Bewegungsbereichs des Zapfens 11 liegt. Ist dagegen der Schlüssel eingeschoben, so wird der Hebel 7 mit seinem der Schlüsseleinführungsseite abgewandten Ende durch den Schieber 5 in den Bewegungsbereich des Zapfens 11 bewegt.

Die Steuerwelle 9 durchdringt einen Schalter 16 und führt auf der gegenüberliegenden Seite des Schalters unter Zwischenschaltung weiterer Teile zum nicht dargestellten Sperriegel, durch den die Lenksäule sperrbar ist. Zwischen der Scheibe 10 der Steuerwelle 9 und dem Schalter 16 ist auf der Steuerwelle 9 ein Kupplungsteil 17 gelagert, das mit einem Ende am Kragen 8 und mit dem anderen Ende am Schalter 16 angekuppelt ist, um die Bewegungen des Zylinderkerns auf den Schalter zu übertragen.

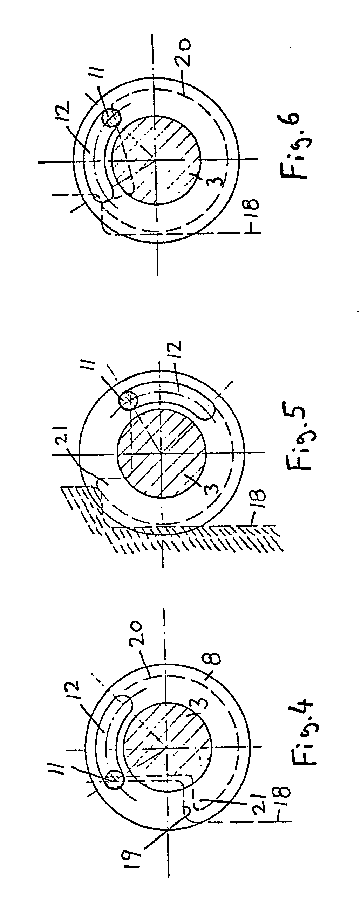

Am inneren Ende des Sperriegels ist ein in gleicher Weise verschieblicher Mitnehmer 18 befestigt, von dem ein einen Vorsprung 19 bildender Bereich in den Figuren 4 bis 6 angedeutet ist. Mit diesem Vorsprung 19 arbeitet ein Steuernocken 20 zusammen, der in den Figuren 4 bis 6 gestrichelt gezeichnet ist und dessen Nocken 21 am Vorsprung 19 zur Anlage gelangt. Der kreisförmige, einen Ausschnitt aufweisende Steuernocken 20 ist koaxial direkt oder über Zwischenteile mit der Steuerwelle 9 verbunden.

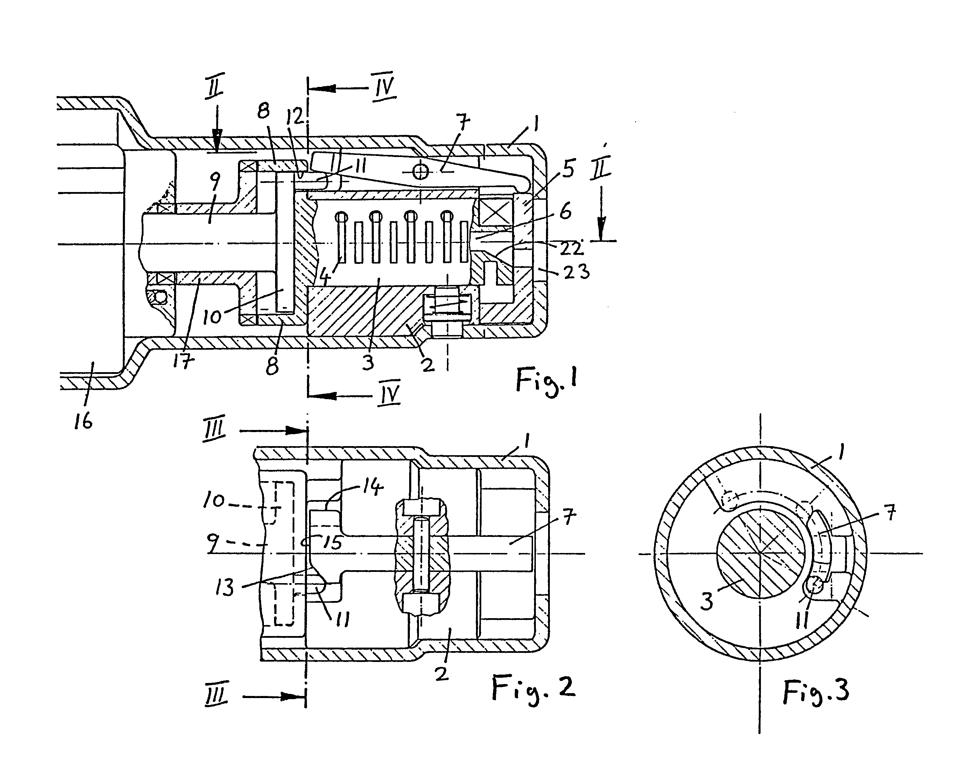

Wird in der Schlüsseleinsteck- bzw. Schlüsselabzugsstellung (Fig. 1, 2 und 4) der Schlüssel eingesteckt, so gleitet die Schlüsselspitze entlang einer Schrägfläche 22 zu Beginn des Schlüsseleinführungskanals, so daß der in einer Öffnung des Schiebers 5 einliegende Schlüsselschaft den Schieber radial nach außen bewegt. Hierdurch gelangt das dem Schieber 5 abgewandte freie Ende des Hebels 7 in den Bewegungsbereich des Zapfens 11 (Fig. 3). Wird nunmehr durch den Schlüssel der Zylinderkern gedreht, so wird über den Zapfen 11 die Steuerwelle sofort mitbewegt, da der Zapfen 11 an einem Ende des Langlochs 12 liegt. Der Zapfen 11 gleitet entlang der Schrägfläche 13 des Hebels 7, so daß die Steuerwelle gegen den Druck einer nicht dargestellten, auf die Steuerwelle zum Zylinderkern hin beaufschlagenden Feder vom Zylinderkern wegbewegt wird. Danach gleitet der Zapfen 11 auf der Fläche 15 des Hebels 7 und rastet hinter dem Rücksprung 14 ein, wobei die Steuerwelle axial zurückgleitet und damit wieder direkt am Zylinderkern anliegt. Dieses Drehen des Zylinderkerns von der Abzugsstellung (Fig. 4) in die Fahrtstellung (Fig. 5) führt über das Verdrehen der Steuerwelle 9 zu einem Verdrehen des Steuernockens 20 um denselben Drehwinkel. Bei diesem Verdrehen des Steuernockens 20 in Fig. 4 im Uhrzeigersinn verschiebt der Nocken 21 durch Anlage am Vorsprung 19 den Mitnehmer 18 in eine Richtung, in der der Mitnehmer 18 den Sperriegel aus der sperrenden Stellung in die freie Stellung gegen den Druck einer Feder bringt.

Wird nach dem Anlassen und der Fahrt des Kraftfahrzeugs der Schlüssel, und damit der Zylinderkern, von der Fahrtstellung in die Schlüsselabzugsstellung zurückgedreht, so dreht sich die Steuerwelle nur so weit mit, bis der Zapfen 11 an dem Rücksprung 14 des Hebels 7 zur Anlage gelangt. Danach dreht sich der Zylinderkern 3 weiter, ohne die Steuerwelle 9 mitzunehmen, da dieser begrenzte freie Lauf das Langloch 12 zuläßt. Steuernocken 20 und Zapfen 11 nehmen nun die in Fig. 6 gezeigte Stellung ein. Da somit der Hebel 7 ein Weiterdrehen der Steuerwelle verhindert, kann der Steuernocken 20 den Sperriegel nicht freigeben (Sperrbereitschaftsstellung). Wird nun der Schlüssel vollständig abgezogen, so wird der Schieber 5 freigegeben, und der Hebel 7 wird durch den Druck des Zapfens 11 aus der Bewegungsbahn des Zapfens herausgekippt. Diesen Druck erzeugt der Zapfen 11 aufgrund der auf den Sperriegel einwirkenden Feder, da diese über den Mitnehmer 18 und den Steuernocken 20 ein Drehmoment auf die Steuerwelle 9 ausübt. Die Steuerwelle 9 kann sich nunmehr in die Anfangsstellung zurückdrehen, und der Steuernocken 20 gibt den Mitnehmer 18 und damit den Sperriegel frei.

Zwischen dem Schieber 5 und der Sperreinführungsöffnung 23 in der Ummantelung 1 kann eine Scheibe aus Hartmetall mit einer entsprechenden Öffnung angeordnet sein, um die Sicherheit gegen Manipulationen zu erhöhen.

## Patentansprüche

1. Lenkschloß für Kraftfahrzeuge mit einem Schließzylinder (3) und mit einem in die Lenksäule arretierenden Sperriegel, der bei Drehen des axial nicht verschieblichen Zylinderkerns (3) durch den Schlüssel von der Abzugsstellung in die Fahrtstellung durch eine den Zylinderkern (3) axial verlängernde Steuerwelle (9) über ein Zwischenteil in die entsperrte Stellung verschiebbar und nach Zurückdrehen des Zylinderkerns (3) in die Abzugsstellung in der entsperrten Stellung durch einen am Schlüssel anliegenden Teil, insbesondere einen Schieber (5), gehalten ist (Sperrbereitschaftsstellung), der erst nach vollständigem Abzug des Schlüssels über ein etwa parallel zum Zylinderkern (3) geführtes Übertragungsteil (7) den Sperriegel freigibt, dadurch gekennzeichnet, daß beim Drehen der Steuerwelle (9) durch den Zylinderkern (3) von der Abzugsstellung in die Fahrtstellung über diesen Drehbereich die Steuerwelle (9) durch eine Schrägfläche (13) des Übertragungsteils (7) vom Zylinderkern weg gegen Federdruck axial verschiebbar ist, um noch vor der Fahrtstellung hinter einem Rücksprung (14) des Übertragungsteils (7) einzurasten, daß aufgrund eines begrenzten Drehspiels zwischen Zylinderkern (3) und Steuerwelle (9) der Zylinderkern von der Fahrtstellung in die Ausgangsstellung zurückdrehbar ist, ohne die Steuerwelle (9) mitzunehmen, und daß bei vollständigem Abzug des Schlüssels das Übertragungsteil (7) außerhalb des Bewegungsbereichs der Steuerwelle (9) ist, so daß zur Freigabe des Sperriegels die Steuerwelle (9) in die Ausgangsstellung durch Federdruck zurückdrehbar ist.

2. Lenkschloß nach Anspruch 1, dadurch gekennzeichnet, daß die Steuerwelle (9) auf der dem Zylinderkern (3) zugewandten Seite einen Vorsprung, insbesondere einen achsparallelen Zapfen (11) aufweist, der am Rücksprung (14) des Übertragungsteils (7) zur Anlage gelangt.

3. Lenkschloß nach Anspruch 2, dadurch gekennzeichnet, daß der Vorsprung oder Zapfen (11) ein teilkreisförmiges Langloch (12) in einem seitlich vorstehenden Bereich (8) des Zylinderkerns (3) durchdringt und mit seinem freien Ende am Übertragungsteil (7) anliegt.

4. Lenkschloß nach einem der Ansprüche 1 bis 3, dadurch gekennzeichnet, daß am Zylinderkern (3) auf der der Steuerwelle (9) zugewandten Seite ein hülsenförmiger Kragen (8) größeren Innendurchmessers als der Außendurchmesser des Zylinderkerns (3) koaxial vorsteht, in dem ein scheibenförmig erweitertes Ende (10) der Steuerwelle koaxial einliegt.

5. Lenkschloß nach Anspruch 4, dadurch gekennzeichnet, daß der äußere Rand des scheibenförmigen Endes (10) der Steuerwelle (9) den Vorsprung (11) oder Zapfen trägt.

6. Lenkschloß nach einem der Ansprüche 1 bis 5, dadurch gekennzeichnet, daß das Übertragungsteil (7) ein zweiarmiger Hebel ist, dessen eines Ende am Schieber (5) anliegt und dessen anderes Ende die Schrägfläche (13) und den Rücksprung (14) für die Steuerwelle (9), insbesondere für den Zapfen (11) der Steuerwelle (9) bildet.

7. Lenkschloß nach einem der Ansprüche 1 bis 6, dadurch gekennzeichnet, daß die Steuerwelle (9) mit einem Steuernocken (20) koaxial verbunden ist, der beim Drehen der Steuerwelle einen mit dem Sperriegel verbundenen Mitnehmer (18) gegen Federdruck betätigt und der nach dem Aufheben der Sperrbereitschaftsstellung durch den Mitnehmer aufgrund des Federdrucks verdrehbar ist.

## Claims

1. Steering wheel lock for automobiles, comprising a lock cylinder (3) and comprising a lock bolt locking into the steering column, which bolt, when the axially immovable cylinder core (3) is rotated by the key from the withdrawal position into the travelling position, can be displaced by a control shaft (9) forming an axial continuation of the cylinder core (3) via an intermediate component into the unlocked position and, after the cylinder core (3) has rotated back into the withdrawal position, is held in the unlocked position by a component bearing against the key, especially a slider (5) (blocking readiness position), which slider does not release the lock bolt via a transmission component (7) orientated approximately parallel to the cylinder core (3) until after the key has been completely withdrawn, characterized in that, when the control shaft (9) is rotated by the cylinder core (3) from the withdrawal position into the travel position, the control shaft (9) can be displaced, through this rotational range, axially away from the cylinder core against spring pressure by an inclined surface (13) of the transmission component (7), in order to engage before the travel position is reached behind a back projection (14) of the transmission component (7), that as a result of a limited rotational play between cylinder core (3) and control shaft (9), the cylinder core can be rotated back from the travel position into the withdrawal position without entraining the control shaft (9), and that, when the key is fully withdrawn, the transmission component (7) is outside the range of movement of the control shaft (9), so that the control shaft (9) can be rotated back into the starting position by spring pressure in order to release the lock bolt.

2. Steering wheel lock according to Claim 1, characterized in that the control shaft (9) possesses, at its end towards the cylinder core (3), a projection, especially an axis-parallel stud (11), which comes into bearing against the back projection (14) of the transmission component (7).

3. Steering wheel lock according to Claim 2, characterized in that the projection or stud (11) penetrates through a circular arc-shaped elongated hole (12) in a laterally projecting region (8) of the cylinder core (3) and bears, with its free end, against the transmission component (7).

4. Steering wheel lock according to one of Claims 1 to 3, characterized in that a sleeve-shaped collar (8) having an internal diameter larger than the external diameter of the cylinder core (3) projects coaxially from the cylinder core (3) at the end towards the control shaft (9), in which collar a disc-shaped, widened end (10) of the control shaft coaxially lies.

5. Steering wheel lock according to Claim 4, characterized in that the outer edge of the disc-shaped end (10) of the control shaft (9) carries the projection (11) or stud.

6. Steering wheel lock according to one of Claims 1 to 5, characterized in that the transmission component (7) is a two-armed lever, the one end of which bears against the slider (5) and the other end of which forms the inclined surface (13) and the back projection (14) for the control shaft (9), especially for the stud (11) of the control shaft (9).

7. Steering wheel lock according to one of Claims 1 to 6, characterized in that the control shaft (9) is coaxially connected with a control cam (20) which, when the control shaft is rotated, actuates against spring pressure an entraining device (18) connected with the lock bolt and which, after the blocking readiness position has been cancelled, can be rotated by the entraining device as a result of the spring pressure.

**Revendications**

1. Serrure de direction pour véhicules automobiles, avec un verrou (3) et une pêne de verrouillage bloquant la colonne de direction qui, par rotation du barillet (3) non coulissant axialement, par la clé, qui peut coulisser de la position d'extraction à la position de marche par un arbre de commande (9) prolongeant axialement le barillet (3) par l'intermédiaire d'une pièce intermédiaire dans la position de déverrouillage et est maintenu après rotation du barillet (3) en position d'extraction en position de déverrouillage par une pièce adjacente à la clé, en particulier un coulisseau (5) (position de préparation au verrouillage), qui ne libère le pêne de verrouillage qu'après une extraction complète de la clé, par l'intermédiaire d'une pièce de transmission (7) guidée sensiblement parallèlement au barillet (3), caractérisée par le fait que, lors de la rotation de l'arbre de commande (9) par le barillet (3) de la position d'extraction à la position de marche, dans ce domaine angulaire, l'arbre de commande (9) peut coulisser axialement par une surface oblique (13) de la pièce de transmission (7) en s'écartant du barillet contre une pression de ressort pour s'encliqueter, déjà avant la position de marche, derrière un épaulement (14) de la pièce de transmission (7), que, du fait d'un jeu de rotation limité entre barillet (3) et arbre de commande (9), le barillet peut être ramené en rotation de la position de marche à la position d'extraction sans entraîner l'arbre de commande (9) avec lui et que, lors de la sortie complète de la clé, la pièce de transmission (7) se trouve en dehors de la zone de déplacement de l'arbre de commande (9) de manière que pour la libération du pêne de verrouillage, l'arbre de commande (9) peut être ramené en rotation à la position de sortie par pression de ressort.

2. Serrure de direction selon la revendication 1, caractérisée par le fait que l'arbre de commande (9) présente, sur la face tournée vers le barillet (3), une saillie, en particulier un tenon (11) à axe parallèle, qui vient en appui sur l'épaulement (14) de la pièce de transmission (7).

3. Serrure de direction selon la revendication 2, caractérisée par le fait que la saillie ou le tenon (11) traverse un trou oblong en arc de cercle (12) dans une zone (8) latéralement saillante du barillet (3) et est en appui sur la pièce de transmission (7) par son extrémité libre.

4. Serrure de direction selon l'une des revendications 1 à 3, caractérisée par le fait qu'une collerette (8) en forme de douille de diamètre intérieur supérieur au diamètre extérieur du barillet (3) fait saillie coaxialement sur le barillet (3) du côté dirigé vers l'arbre de commande (9), dans laquelle est logée axialement une extrémité (10) de l'arbre de commande élargie en forme de disque.

5. Serrure de direction selon la revendication 4, caractérisée par le fait que le bord extérieur de l'extrémité (10) en forme de disque de l'arbre de commande (9) porte la saillie (11) ou le tenon.

6. Serrure de direction selon l'une des revendications 1 à 5, caractérisée par le fait que la pièce de transmission (7) est un levier à deux bras dont une extrémité est en appui sur le coulisseau (5) et dont l'autre extrémité forme la surface oblique (13) et l'épaulement (14) pour l'arbre de commande (9), en particulier pour le tenon (11) de l'arbre de commande (9).

7. Serrure de direction selon l'une des revendications 1 à 6, caractérisée par le fait que l'arbre de commande (9) est relié coaxialement à une came de commande (20) qui actionne un entraîneur (18) relié au pêne de verrouillage, contre une pression de ressort, lors de la rotation de l'arbre de commande, et peut être tourné, du fait de la pression de ressort, par l'entraîneur après la suppression de la position de préparation au verrouillage.

Fig. 1

Fig. 2

Fig. 3

Fig.4

Fig.5

Fig.6

EP 0 195 209 B1